# EUROPÄISCHE PATENTANMELDUNG

(11) **EP 3 015 296 A2**
(43) Veröffentlichungstag der Anmeldung: **04.05.2016**
(21) Anmeldenummer: 15191558.4
(22) Anmeldetag: 27.10.2015
(51) Int. Cl.: B60G 17/016, B60G 21/00, B60G 21/073, B62K 5/01, B62K 5/027, B62K 5/10

(54) **NEIGUNGSERMÖGLICHENDE RADAUFHÄNGUNG FÜR FAHRZEUGE**

(30) Priorität: 31.10.2014 CH 16722014
(71) Anmelder: vonRoll infratec (investment) ag, 6300 Zug (CH)
(72) Erfinder: REUSSER, Rino, 2502 Biel (CH); VOISARD, Raphael, 2905 Courtedoux (CH); KAYSER, Stefan, 2540 Grenchen (CH)
(74) Vertreter: OK pat AG

(57) **Zusammenfassung**

Eine Radaufhängung (10) für ein Fahrzeug mit einem tragenden Fahrzeugelement (14) umfasst mindestens ein Paar von Einarmschwingen (12A,12B). Jeder Einarmschwinge (12A,12B) ist ein Hydraulikzylinder (18A,18B) zugeordnet, welcher an der Einarmschwinge (12A, 12B) und/oder an dem tragenden Fahrzeugelement (14) angelenkt ist. Jeder Hydraulikzylinder (18A,18B) ist durch einen beweglichen Kolben (25A, 25B) fluiddicht in zwei Kammern unterteilt. Eine erste Kammer (26A-1,26B-1) des Hydraulikzylinders (18A,18B) ist durch eine aktive Funktion und eine zweite Kammer (26A-2,26B-2) desselben Hydraulikzylinders (18A,18B) ist durch eine passive Funktion gekennzeichnet. Die aktive Kammer (26A-1,26B-1) ist flüssigkeitsgefüllt. Die aktiven Kammern (26A-1,26B-1) eines Einarmschwingen-Paars (12A,12B) kommunizieren über eine Flüssigkeitsleitung (28) in einem geschlossenen System miteinander. Die passive Kammer (26A-2,26B-2) ist fluidgefüllt, wobei das Fluid in der passiven Kammer (26A-2,26B-2) eine Kraft auf die Rückseite des Kolbens (25A,25B) ausübt, die im Wesentlichen der durch den Druck der Umgebungsluft ausgeübten Kraft entspricht und dadurch Positionen des Kolbens (25A,25B) unwesentlich beeinflusst.

## Beschreibung

Die vorliegende Erfindung betrifft gemäss dem unabhängigen Anspruch 1 eine neigungsermöglichende Radaufhängung für Fahrzeuge, und gemäss den abhängigen Ansprüchen 18 und 20 ein Fahrzeug mit einer solchen Radaufhängung und ein mehrrädriges, insbesondere ein dreirädriges oder vierrädriges Motorfahrzeug mit einer solchen Radaufhängung.

Aus EP 0 876 263 B1 sind Fahrzeuge bekannt, bei welchen die Vorderräder und/oder die Hinterräder derart über jeweilige Radaufhängungen an einem Chassis des Fahrzeugs angelenkt sind, dass das Fahrzeug bei Kurvenfahrten in Richtung zum Kurveninneren neigbar ist. Hierzu notwendige Einarmschwingen-Paare (ein Einarmschwingen-Paar für die Vorderräder und/oder ein Einarmschwingen-Paar für die Hinterräder) gestatten hierbei eine gegenläufige Bewegung der jeweiligen Räder in Relation zueinander. Den Einarmschwingen sind zum Einleiten der gegenläufigen Schwenkbewegung jeweils Hydraulikzylinder zugeordnet, in welchen ein Kolben bewegbar eingesetzt ist. Der Kolben unterteilt die Zylinderkammer des jeweiligen Hydraulikzylinders in zwei Kammern. Jeweils zueinander zugeordnete Kammern eines jeweiligen Einarmschwingen-Paars sind über eine Fluidleitung miteinander verbunden.

Ein in dieses geschlossene System eingefülltes Fluid, beispielsweise ein Hydrauliköl, überführt eine Bewegung des Kolbens eines ersten Hydraulikzylinders in eine Bewegung des Kolbens eines zweiten Hydraulikzylinders in eine entgegengesetzte Richtung mit einem im Wesentlichen gleichen Hub. Wird somit das kurveninnere Rad, welches durch eine erste Einarmschwinge am Chassis angelenkt ist, in eine in Relation zum Fahrzeug aufwärts gerichtete Richtung bewegt, wird gleichzeitig das kurvenäussere Rad, welches durch eine zweite Einarmschwinge am Chassis angelenkt ist, in die entgegengesetzte Richtung bewegt. Hierdurch wird sichergestellt, dass beide Räder, auch bei Kurvenfahrten, dauerhaft mit der Fahrbahnoberfläche in Bodenkontakt stehen. Die Hydraulikzylinder sind jeweils über ihre jeweiligen Enden zwischen den Einarmschwingen und dem Chassis des Fahrzeugs angelenkt.

Aus EP 2 046 589 B1 ist bekannt, dass die jeweiligen Kammern (erste und zweite Kammern) der beiden Hydraulikzylinder eines Einarmschwingen-Paars jeweils über Fluidleitungen miteinander verbunden sein können, sodass zwei geschlossene Systeme ausgebildet sind. Die geschlossenen Systeme sind mit einem mit Druck beaufschlagten Fluid, beispielsweise Hydrauliköl, Gas, usw., gefüllt. Es ist aus EP 2 046 589 B1 ebenfalls bekannt, dass nur ein geschlossenes System vorgesehen ist (z.B. sind nur die ersten Kammern der beiden Hydraulikzylinder eines Einarmschwingen-Paars mittels einer Fluidleitung miteinander verbunden). In diesem vorbekannten Beispiel sind dann die jeweiligen weiteren Kammern (z.B. die zweiten Kammern) geschlossen. Ein in diese separaten Kammern eingeschlossenes Fluid, z.B. ein Gas, wirkt hierbei als Puffer bzw. als Dämpfung des Kolbens.

Die Aufgabe der vorliegenden Erfindung besteht darin, eine alternative Ausführungsform der im Stand der Technik bekannten Radaufhängung bereitzustellen. Die Aufgabe wird durch den Gegenstand der unabhängigen Ansprüche gelöst.

Erfindungsgemäss ist eine Radaufhängung für ein Fahrzeug mit einem tragenden Fahrzeugelement bereitgestellt. Die Radaufhängung umfasst mindestens ein Paar Einarmschwingen, wobei jede der Einarmschwingen separat am tragenden Fahrzeugelement angelenkt ist und ein Rad drehbar an der Einarmschwinge befestigt ist, wobei jeder Einarmschwinge ein Hydraulikzylinder zugeordnet ist, welcher an der Einarmschwinge und/oder an dem tragenden Fahrzeugelement angelenkt ist, wobei jeder Hydraulikzylinder durch einen beweglichen Kolben fluiddicht in zwei Kammern unterteilt ist. Jeder Hydraulikzylinder umfasst eine erste Kammer mit einer aktiven Funktion und eine zweite Kammer mit einer passiven Funktion, wobei die aktive Kammer flüssigkeitsgefüllt ist, wobei die aktiven Kammern eines Einarmschwingen-Paars über eine Flüssigkeitsleitung in einem geschlossenen System miteinander kommunizieren, wodurch Bewegungen des Kolbens eines ersten der Hydraulikzylinder entsprechende Gegenbewegungen des Kolbens eines zweiten der Hydraulikzylinder bewirken, und wobei die passive Kammer fluidgefüllt ist, wobei das Fluid in der passiven Kammer eine Kraft auf die Rückseite des Kolbens ausübt, die im Wesentlichen der durch den Druck der Umgebungsluft ausgeübten Kraft entspricht und dadurch Positionen des Kolbens unwesentlich beeinflusst.

Im Zusammenhang mit der vorliegenden Erfindung werden "tragende Fahrzeugelemente" wie folgt definiert:
Ein "Chassis" ist ein als tragende Rahmenstruktur, bzw. als Fahrgestell ausgebildetes tragendes Fahrzeugelement.
Eine "Karosserie" ist eine Verschalung, die zumindest teilweise vom Chassis getragen wird oder die als tragendes Fahrzeugelement ausgebildet ist und als selbsttragende Struktur die Eigenschaften von Chassis und Karosserie vereint.

Das Chassis kann teilweise Verschalungen umfassen, und die Karosserie kann Rahmenstrukturen umfassen. Das Chassis und die Verschalung, bzw. der Rahmen und die Karosserie sind beweglich oder unbeweglich miteinander verbunden.

Weitere Bauteile eines Fahrzeugs, wie z.B. die Batterie, der Treibstofftank, der Motor und das Getriebe, können ebenfalls eine tragende Funktionen aufweisen, indem sie bzw. deren Teile mit Teilen des Chassis, der Karosserie und/oder Teilen der Radaufhängung beweglich oder unbeweglich verbunden sind.

Im Folgenden werden der Einfachheit halber alle tragenden Fahrzeugelemente, wie beispielsweise das Chassis, die Karosserie, die Rahmenstruktur und deren Kombinationen, sowie weitere tragende Bauteile eines Fahrzeugs als tragendes Fahrzeugelement bezeichnet. Stellvertretend für alle möglichen und sinnvollen Kombinationen solcher tragender Fahrzeugelemente, aber keinesfalls einschränkend, wird in allen Figuren ein Chassis gezeigt. Ein als Einarmschwinge ausgebildetes Teil einer Radaufhängung kann als eigenständiges Bauteil, als Rahmenstruktur, als Karosserieteil bzw. als deren Kombination ausgebildet sein. Ferner umfasst eine Radaufhängung für die Vorderräder und/oder Hinterräder eines Fahrzeugs zwei bzw. ein Paar Einarmschwingen.

Es ist eine Radaufhängung mit Hydraulikzylindern geschaffen, welche jeweils in eine aktive Kammer und eine passive Kammer fluiddicht unterteilt sind. Die aktiven Kammern sind flüssigkeitsgefüllt und über eine Flüssigkeitsleitung miteinander verbunden und bilden somit ein geschlossenes System. Dieses geschlossene System der aktiven Kammern kann mit Überdruck oder Unterdruck beaufschlagt sein. Hierdurch werden Bewegungen des Kolbens eines ersten der Hydraulikzylinder in entsprechende Gegenbewegungen des Kolbens eines zweiten der Hydraulikzylinder in entgegensetzte Richtung überführt. Die passiven Kammern der Hydraulikzylinder sind hingegen fluidgefüllt, wobei das Fluid keine wesentliche Kraft auf die Rückseite des Kolbens ausübt. Hierdurch wird seitens der passiven Kammern - bezogen auf den jeweiligen Umgebungsdruck - keinerlei Einfluss auf Positionen bzw. Bewegungen des Kolbens hervorgerufen. Somit werden die Kolben der jeweiligen Hydraulikzylinder lediglich seitens der aktiven Kammern gegenseitig bewegt bzw. verstellt. Hierdurch werden vorteilhafterweise Fremdeinflüsse auf die Bewegungen der Kolben ausgeschlossen. Die Bewegungen der Kolben in jeweils entgegengesetzter Richtung sind durch die Inkompressibilität des flüssigen Mediums vorteilhafterweise exakt synchron. Ferner sind die Hübe der Kolben in jeweils entgegengesetzter Richtung jeweils exakt identisch. Bei einem Fahrzeug mit einer solchen Radaufhängung wird hierdurch ein verbesserter Bodenkontakt der Räder mit der Fahrbahnoberfläche ermöglicht. Zudem ist eine im Vergleich zum Stand der Technik raschere Reaktion der Räder auf Unebenheiten erzielbar. Hierdurch wird insgesamt ein angenehmeres Fahrgefühl vermittelt. Gleichzeitig wird die Sicherheit des Fahrzeugs erhöht. Ein Vorteil der Radaufhängung besteht in der annähernd widerstandsfreien Neigung um die auf den Boden projizierte Längsachse eines mit der Radaufhängung bereitgestellten Fahrzeugs. Hierdurch stellt sich (unabhängig von der Anzahl Räder) ein Fahrgefühl ein, welches ähnlich dem Fahrgefühl bei einem 2-rädrigen Motorrad ist.

Falls das Fluid in den passiven Kammern der Hydraulikzylinder ein Gas umfasst, z.B. Luft, umfassen die Hydraulikzylinder vorzugsweise jeweils einen den passiven Kammern zugeordneten Luftfilter, über welchen die passiven Kammern jeweils mit der Umgebungsluft kommunizierend ausgebildet sind. Hierdurch wird auf vorteilhafte Weise ein Eindringen von Fremdpartikeln, beispielsweise Schmutz, Staub, usw., und von Flüssigkeiten, beispielsweise Wasser, in die passiven Kammern verhindert. Somit werden nachteilhafte Beeinträchtigungen der Hydraulikzylinder verhindert. Zudem erhöht sich hierdurch die Lebensdauer der Hydraulikzylinder. Gleichzeitig wird ein Druckaustausch zwischen den passiven Kammern und dem Druck der Umgebungsluft zuverlässig gewährleistet. Hierdurch werden jegliche Störkräfte auf den Kolben eines jeweiligen Hydraulikzylinders durch beispielsweise einen Überdruck oder einen Unterdruck seitens einer der passiven Kammer zugewandten Seite des Kolbens in Relation zum Druck der Umgebungsluft verhindert. Die Bewegung der Kolben innerhalb der Hydraulikzylinder ist somit frei von jeglichen Störkräften und zugleich sind die passiven Kammern durch die Luftfilter gegen ein Eindringen von Fremdpartikeln geschützt.

Alternativ und bevorzugt umfasst die Radaufhängung eine den passiven Kammern zugeordnete Fluidleitung, über welche die passiven Kammern der Hydraulikzylinder eines Einarmschwingen-Paars miteinander kommunizierend ausgebildet sind. Die jeweiligen passiven Kammern und die Fluidleitung bilden hierbei ein druckfreies, geschlossenes System aus, sodass keinerlei Störkräfte auf die Kolben einwirken. Durch die Fluidleitung sind die passiven Kammern zudem gegenüber der Aussenumgebung abgedichtet, sodass keine Fremdpartikel in die passiven Kammern gelangen können. Vorzugsweise ist dieses geschlossene System mit einem Gas oder Gasgemisch, z.B. Luft oder Inertgas, gefüllt. Alternativ kann das geschlossene System mit Flüssigkeit gefüllt sein. Auch sind Kombinationen von Fluiden verwendbar. In einem Fall, bei welchem die passiven Kammern mit Gas oder einem Gasgemisch gefüllt sind, kann die Fluidleitung wenigstens eine Öffnung umfassen, um einen Druckausgleich mit dem Aussendruck herzustellen. In die Öffnung kann beispielsweise ein Luftfilter eingesetzt sein.

Vorzugsweise umfasst die Radaufhängung ferner wenigstens eine Dämpfungseinheit, deren Eingang mit der Flüssigkeitsleitung verbunden ist. Durch die Dämpfungseinheit wird erzielt, dass jeweils paarweise zugeordnete Hydraulikzylinder feiner arbeiten. Zudem wird durch die Dämpfungseinheit eine zusätzliche Funktion zur Fahrzeugdämpfung übernommen. Beispielhafte Dämpfungseinheiten umfassen Membranspeicher.

Vorzugsweise umfasst die Radaufhängung ferner wenigstens ein Flüssigkeits-Steuerventil, welches in der Flüssigkeitsleitung zwischen den aktiven Kammern der Hydraulikzylinder angeordnet ist und dazu ansteuerbar ist, den Flüssigkeitsaustausch zwischen den aktiven Kammern der Hydraulikzylinder eines Einarmschwingen-Paars zu steuern. Das zwischengeordnete Flüssigkeits-Steuerventil gestattet einen steuerbaren Flüssigkeitsaustausch, welcher durch die Öffnungsweite des Flüssigkeits-Steuerventils einstellbar ist. Sobald das Flüssigkeits-Steuerventil durch eine entsprechende Ansteuerung vollständig geschlossen ist, wird der Flüssigkeitsaustausch zwischen den aktiven Kammern der Hydraulikzylinder eines Einarmschwingen-Paars gesperrt bzw. blockiert, sodass eine Bewegung der Einarmschwingen gänzlich blockiert wird.

Durch diese Blockierung wird eine Neigung eines der Radaufhängung zugeordneten Fahrzeugs verhindert. Diese Einstellung zum Blockieren kann beispielsweise vorgenommen werden, wenn das Fahrzeug mit sehr geringen Geschwindigkeiten fährt, angehalten wird, oder wenn das Fahrzeug parkiert ist. Das Flüssigkeits-Steuerventil kann motorisch oder manuell ansteuerbar sein. Hierdurch ist eine Radaufhängung geschaffen, bei welcher die Verstellung der Neigung bei Kurvenfahrten in Abhängigkeit von vorbestimmten Bedingungen, beispielsweise abhängig von der aktuellen Geschwindigkeit des Fahrzeugs oder von dem jeweiligen Neigungswinkel des Fahrzeugs, durch motorisches Ansteuern des Flüssigkeits-Steuerventils genau eingestellt werden kann. Das Flüssigkeits-Steuerventil kann ein elektrisch ansteuerbares Ventil sein, z.B. ein Solenoid, bzw. Magnetventil. Das Flüssigkeits-Steuerventil kann durch einen Schrittmotor angesteuert werden. Alternativ oder zusätzlich können diese Einstellungen auch manuell vorgenommen werden.

Vorzugsweise ist das wenigstens eine Flüssigkeits-Steuerventil dazu ausgebildet, einen Flüssigkeitsaustausch zwischen den aktiven Kammern der Hydraulikzylinder eines Einarmschwingen-Paars mit zunehmender Erstreckung des Kolbens in die Zylinderkammer hinein oder aus dieser heraus gemäss einer wählbaren Funktionskurve, z.B. progressiv, zu steuern (z.B. zu reduzieren oder zu öffnen). Hierbei wird das Flüssigkeits-Steuerventil derart angesteuert, dass die Neigungscharakteristik des Fahrzeugs gemäss der wählbaren, bzw. einer vorbestimmten Funktionskurve, individuell angepasst wird. Beispielsweise kann das Flüssigkeits-Steuerventil derart angesteuert werden, dass es, zum Neigungsanschlag des Fahrzeugs hin (maximale Neigung), die Flüssigkeitsleitung gemäss der wählbaren Funktionskurve, z.B. progressiv, schliesst, wodurch der Flüssigkeitsaustausch zwischen den aktiven Kammern reduziert wird. Diese Ansteuerung hat zur Folge, dass die Neigung des Fahrzeugs zum Neigungsanschlag des Fahrzeugs hin verlangsamt wird. Hingegen in der Gegenrichtung, d.h. die Richtung zum Aufrichten des Fahrzeugs aus der Neigelage heraus, kann das Flüssigkeits-Steuerventil geöffnet oder sogar vollständig geöffnet werden, um hierdurch eine rasche und zuverlässige Aufrichtung des Fahrzeugs zu gewährleisten. Mit anderen Worten, kann zusätzlich vorgesehen sein, dass das wenigstens eine Flüssigkeits-Steuerventil gänzlich geöffnet wird, sobald sich das Fahrzeug aufrichtet. Hierdurch sind sichere Fahreigenschaften des Fahrzeugs insbesondere bei Kurvenfahrten gewährleistet.

Vorzugsweise umfasst die Radaufhängung wenigstens zwei Dämpfungseinheiten, deren Eingänge jeweils mit der Flüssigkeitsleitung an einem Abschnitt derer zwischen jeweils den aktiven Kammern der Hydraulikzylinder und dem Flüssigkeits-Steuerventil verbunden sind. Im Falle eines zwischengesetzten Flüssigkeits-Steuerventils kann beispielsweise eine erste Dämpfungseinheit mit der zwischen dem Flüssigkeits-Steuerventil und einem ersten Hydraulikzylinder erstreckten Flüssigkeitsleitung verbunden werden, und kann eine zweite Dämpfungseinheit mit der zwischen dem Flüssigkeits-Steuerventil und einem zweiten Hydraulikzylinder erstreckten Flüssigkeitsleitung verbunden werden. Durch die Bereitstellung von jeweils einer Dämpfungseinheit an beiden Abschnitten der Flüssigkeitsleitung können die beiden Hydraulikzylinder, unabhängig von der Öffnungsweite des Flüssigkeits-Steuerventils, sehr fein arbeiten und zugleich insgesamt eine Funktion zur Dämpfung der Radaufhängung übernehmen. Durch diese Anordnung ist eine zuverlässige Funktion der individuellen Dämpfung an beiden Einarmschwingen eines Einarmschwingen-Paars auch bei blockierter Neigung, d.h. bei einem geschlossenen Zustand des Flüssigkeits-Steuerventils, zuverlässig gewährleistet.

Vorzugsweise umfasst die Radaufhängung ferner eine Anzahl (d.h. eine oder mehrere) mechanische Bremsen, welche jeweils zwischen dem tragenden Fahrzeugelement und den Einarmschwingen derart angeordnet sind, um eine Schwenkbewegung der Einarmschwinge in Relation zum tragenden Fahrzeugelement zu bremsen, blockieren oder freizugeben. Bei dieser Ausgestaltung können die aktiven Kammern der Hydraulikzylinder eines Einarmschwingen-Paars direkt ohne das zuvor genannte Flüssigkeits-Steuerventil miteinander verbunden sein. Die Ansteuerung der Neigung des Fahrzeugs durch die Radaufhängung erfolgt in diesem Fall durch die mechanischen Bremsen. Hierdurch ist eine weiter zuverlässig einstellbare Neigungscharakteristik des Fahrzeugs gewährleistet.

Vorzugsweise sind die mechanischen Bremsen jeweils einem Hydraulikzylinder zugeordnet und dazu ansteuerbar, eine Bewegung der Kolbenstange des Kolbens in Relation zum Zylinder zu bremsen, zu blockieren oder freizugeben. Hierdurch kann der jeweilige Hub eines jeweiligen Kolbens individuell in einem Bereich zwischen einer Blockierung, einer Freigabe und einer vollständigen Freigabe zuverlässig gesteuert werden.

Vorzugsweise umfasst die Radaufhängung ferner eine Anzahl (d.h. ein oder mehrere) Federelement(e), wobei jeweils wenigstens ein Federelement zwischen dem tragenden Fahrzeugelement und den Einarmschwingen derart angeordnet und ausgebildet ist, um eine Rückstellkraft zwischen dem tragenden Fahrzeugelement und den jeweiligen Einarmschwingen anzulegen. Die jeweiligen Federelemente sind derart angeordnet, dass sie, in einem Bereich maximaler Neigung des Fahrzeugs, der Neigung des Fahrzeugs entgegenwirken und ein erneutes Aufrichten des Fahrzeugs durch entsprechende Krafteinwirkung unterstützen. Hierzu kann jeweils eines der Anzahl von Federelementen wenigstens abschnittsweise auf einem ausserhalb des Zylinders erstreckten Abschnitt der Kolbenstange des jeweiligen Hydraulikzylinders aufgesteckt sein. Bei einer Neigung des Fahrzeugs im Bereich einer maximalen Neigung legt das Federelement eine Rückstellkraft zwischen dem Zylinder des jeweiligen Hydraulikzylinders und der hieran angelenkten Einarmschwinge an. Diese Rückstellkraft wirkt einer Kraft zum weiteren Einschwenken der Einarmschwinge in Relation zum tragenden Fahrzeugelement (Neigung des Fahrzeugs) entgegen und unterstützt ferner ein Aufrichten des Fahrzeugs. In einem weiteren Beispiel können die jeweiligen Federelemente, in einem Fall, bei welchem der Hydraulikzylinder unter Druckbelastung ein Einschwenken einer jeweils angelenkten Einarmschwinge in Relation zum tragenden Fahrzeugelement zulässt, wenigstens abschnittsweise innerhalb der aktiven Kammer eines jeweiligen Hydraulikzylinders angeordnet sein. Alternativ können die jeweiligen Federelemente, in einem Fall, bei welchem der Hydraulikzylinder unter Zugbelastung ein Einschwenken einer jeweils angelenkten Einarmschwinge in Relation zum tragenden Fahrzeugelement zulässt, wenigstens abschnittsweise innerhalb der passiven Kammer eines jeweiligen Hydraulikzylinders angeordnet sein. In einem weiteren Beispiel ist jeweils eines der Anzahl von Federelementen separat zu einem jeweiligen Hydraulikzylinder zwischen dem tragenden Fahrzeugelement und der jeweiligen Einarmschwinge angeordnet. Die jeweiligen Federelemente können z.B. als eine mechanische Feder oder als eine Gasfeder ausgebildet sein. Es kann pro Hydraulikzylinder auch mehr als jeweils ein Federelement bereitgestellt sein. Beispielsweise können zwei oder mehr Federelemente pro Hydraulikzylinder vorgesehen sein, welche eine unterschiedliche Federkonstante haben. So können die jeweiligen Federn mit einer geringeren Federkonstante eine leichte entgegengesetzte Rückstellkraft zwischen Einarmschwinge und tragendem Fahrzeugelement anlegen, während Federn mit grösserer Federkonstante - bei fortgeschrittener Neigung des Fahrzeugs - eine grössere entgegengesetzte Rückstellkraft zwischen diesen anlegen können. Somit wird insgesamt eine entgegengesetzte Rückstellkraft mit progressiven Eigenschaften angelegt.

Vorzugsweise umfasst die Radaufhängung ferner eine Anzahl von Stossdämpfern, wobei jeweils vorzugsweise zumindest ein Stossdämpfer einer Einarmschwinge (oder alternativ beiden Einarmschwingen) zugeordnet ist, wobei der bzw. die Stossdämpfer jeweils mit dem tragenden Fahrzeugelement und/oder den Einarmschwingen verbunden sind. Die Stossdämpfer absorbieren und dämpfen Stösse, welche an die jeweiligen Einarmschwingen angelegt werden. Hierdurch wird der Fahrkomfort des Fahrzeuges weiter verbessert. Ferner kann ein weiter verbesserter Bodenkontakt zwischen den jeweils an den Einarmschwingen drehbar gelagerten Rädern und dem Untergrund sichergestellt werden. Hierdurch wird die Sicherheit des Fahrzeugs auch bei ungünstigen Bodenbelagsverhältnissen erhöht.

In einer weiteren Ausführungsform umfasst die Radaufhängung eine Anzahl von Hebelelementen, wobei ein jeweils einer Einarmschwinge zugeordnetes Hebelelement schwenkbar am tragenden Fahrzeugelement angebracht ist und dessen Abschnitte jeweils mit dem Stossdämpfer und/oder dem Hydraulikzylinder verbunden sind. In dieser Ausführungsform sind die Hydraulikzylinder jeweils zwischen einer jeweiligen Einarmschwinge und einem ersten Ende des Hebelelements verbunden. Ferner sind die Stossdämpfer jeweils zwischen dem tragenden Fahrzeugelement des Fahrzeugs und einem zweiten Ende des Hebelelements verbunden. Die beiden Enden des Hebelelements sind hierbei über einen Angelpunkt des Hebelelements hinweg zueinander gegenüberliegend. Hierdurch ist gewährleistet, dass Stösse auf die jeweilige Einarmschwinge unabhängig von der Neigung dieser Einarmschwinge in Relation zum tragenden Fahrzeugelement (Neigung des Fahrzeugs bei Kurvenfahrten) zuverlässig absorbiert und gedämpft werden. Beispielsweise sind die Stossdämpfer jeweils mit dem tragenden Fahrzeugelement und einem Abschnitt des Hebelelements verbunden und sind die Hydraulikzylinder jeweils mit der Einarmschwinge und einem weiteren Abschnitt des Hebelelements verbunden. Somit wird auch bei Kurvenfahrten ein erhöhter Fahrkomfort gewährleistet. Aufgrund des erhöhten Bodenkontakts ist zudem die Sicherheit gegen ein Ausbrechen des Fahrzeugs bei Kurvenfahrten zwischen den Rädern und der Fahrbahnoberfläche erhöht. In einem weiteren alternativen Beispiel sind die Stossdämpfer jeweils mit der Einarmschwinge und einem Abschnitt des Hebelelements verbunden und sind die Hydraulikzylinder jeweils mit dem tragenden Fahrzeugelement und einem weiteren Abschnitt des Hebelelements verbunden. Alternativ vorzugsweise sind der Stossdämpfer und die Hydraulikzylinder einer jeweils zugeordneten Einarmschwinge seriell miteinander verbunden. Durch die serielle Anordnung können Stösse auf die Räder zuverlässig absorbiert werden.

Vorzugsweise sind die Stossdämpfer und die Hydraulikzylinder einer jeweils zugeordneten Einarmschwinge starr miteinander verbunden. Hierbei sind die Hydraulikzylinder jeweils an den Einarmschwingen angelenkt und sind die Stossdämpfer jeweils am tragenden Fahrzeugelement angelenkt. Ferner sind die Hydraulikzylinder und die Stossdämpfer an ihren weiteren Enden starr (fest) miteinander verbunden. Selbstverständlich können Hydraulikzylinder und Stossdämpfer in ihrer Anordnung vertauscht werden. Durch diese Anordnung werden die Einarmschwingen mittels der Hydraulikzylinder, jeweils der Neigung des Fahrzeugs entsprechend, genau ausgelenkt. Ferner werden Stösse auf die Räder durch die seriell nachgeschalteten Stossdämpfer zuverlässig absorbiert.

Alternativ vorzugsweise sind die Stossdämpfer und die Hydraulikzylinder einer jeweils zugeordneten Einarmschwinge über einen gemeinsamen Anlenkpunkt zueinander schwenkbar angelenkt, wobei ferner eine zwischen dem gemeinsamen Anlenkpunkt und dem tragenden Fahrzeugelement angelenkte Strebe umfasst ist. Hierbei sind jeweils paarweise zugeordnete Hydraulikzylinder und Stossdämpfer nicht starr miteinander verbunden sondern zueinander schwenkbar angelenkt. An dem Gelenkpunkt, bzw. Schwenkpunkt sind jeweils Streben angelenkt. Die weiteren Enden der jeweiligen Streben sind wiederum am tragenden Fahrzeugelement angelenkt. Hierbei ist es bevorzugt, dass die jeweiligen Schwenkachsen zwischen dem tragenden Fahrzeugelement und den Streben und die jeweiligen Schwenkachsen zwischen dem tragenden Fahrzeugelement und den angelenkten Einarmschwingen entlang einer gemeinsamen Linie bzw. Achse verlaufen. Wird verlangt, dass die Stossdämpfer und Hydraulikzylinder unabhängig voneinander funktionieren, so müssen die Schwenkachsen zwischen dem tragenden Fahrzeugelement und den Streben und die jeweiligen Schwenkachsen zwischen dem tragenden Fahrzeugelement und den angelenkten Einarmschwingen entlang einer gemeinsamen Achse verlaufen. Hierdurch können die Hydraulikzylinder besonders fein arbeiten und werden zugleich Stösse auf die Räder zuverlässig absorbiert.

Alternativ vorzugsweise sind die Stossdämpfer und die Hydraulikzylinder einer jeweils zugeordneten Einarmschwinge in Längsrichtung vorzugsweise abschnittsweise überlappt angeordnet und miteinander verbunden; hier wird eine starre Verbindung bevorzugt. Die Stossdämpfer sind also am tragenden Fahrzeugelement angelenkt und an ihren weiteren Enden mit den jeweiligen Hydraulikzylindern fest verbunden. Selbstverständlich können Hydraulikzylinder und Stossdämpfer in ihrer Anordnung vertauscht werden. Die Stossdämpfer und die jeweiligen Hydraulikzylinder können über ein Bauelement miteinander verbunden sein. Das Bauelement kann am Aussenumfang einer Zylinderkammer fixiert sein oder den Hydraulikzylinder und einen Teil des Stossdämpfers umfassen. Die Kolbenstangen der jeweiligen Hydraulikzylinder können sich hierbei durch jeweils in die Bauelemente eingebrachte Aperturen erstrecken. Die Enden der Kolbenstangen sind wiederum an den Einarmschwingen angelenkt. Somit verlaufen die Achsen der Hydraulikzylinder und der Stossdämpfer zueinander parallel. Hierdurch ist deren Arbeit unbeeinträchtigt, sodass die Hydraulikzylinder weiterhin fein arbeiten und die Stossdämpfer zuverlässig Stösse absorbieren. In dieser Ausführungsform wird aufgrund der bevorzugt abschnittsweise überlappten Anordnung zwischen Hydraulikzylinder und Stossdämpfer eine kompaktere Bauform der Radaufhängung erzielt. Somit ist die Erstreckung der Anordnung aus Hydraulikzylinder und Stossdämpfer um die Länge der Zylinderkammer in Längserstreckung reduziert, wodurch die Radaufhängung kompakt wird. Es kann auch eine insgesamt grössere Auslenkung der Einarmschwingen erzielt werden, da Hydraulikzylinder mit insgesamt vergrösserter Erstreckung eingesetzt werden können. Selbstverständlich können Hydraulikzylinder und Stossdämpfer in ihrer Anordnung vertauscht werden. Alternativ oder zusätzlich kann der Feder-/Dämpfungsweg der Stossdämpfer vergrössert werden, sodass eine komfortablere Dämpfung des Fahrzeugs erreicht wird.

Vorzugsweise sind die jeweils einem Hydraulikzylinder zugeordneten Einarmschwingen entgegengesetzt auf Druckbelastung oder auf Zugbelastung der aktiven Kammer des jeweiligen Hydraulikzylinders auslenkbar. Indem die jeweils aktive Kammer eines Hydraulikzylinders unter Druck oder Zug, bzw. Überdruck oder Unterdruck - jeweils in Relation zum Druck der Umgebungsluft - belastet werden kann, ist ein hoher Freiheitsgrad beim Entwurf der Radaufhängung gewährleistet. Hierdurch ist insgesamt auch eine grössere Entwurfsfreiheit beim Entwurf und bei der Entwicklung des Fahrzeugs gegeben.

Die zuvor genannte Aufgabe wird zudem durch ein Fahrzeug mit einer Radaufhängung nach einem der Ansprüche 1 bis 17 gelöst, ausgebildet zum Neigen bei Kurvenfahrten in Richtung zum Kurveninneren. Das erfindungsgemässe Fahrzeug lässt sich bei Kurvenfahrten zuverlässig in Richtung zum Kurveninneren neigen, sodass Kurven auch bei hoher Geschwindigkeit des Fahrzeugs durchfahren werden können. Zudem ist bei dem Fahrzeug ein stets zuverlässiger Bodenkontakt zwischen den Rädern und der Fahrbahnoberfläche gewährleistet. Hierdurch genügt das Fahrzeug auch hohen Sicherheitsanforderungen. Das Fahrzeug kann ein jegliches Fahrzeug sein, welches durch die Schwerkraft und/oder einen elektrischen Motor und/oder einen Verbrennungsmotor und/oder durch Muskelkraft angetrieben oder gezogen wird. Die Anzahl der Räder des Fahrzeugs ist nicht beschränkt, allerdings umfasst ein solches Fahrzeug bevorzugt drei oder vier Räder.

Vorzugsweise umfasst das Fahrzeug ferner wenigstens einen Beschleunigungssensor, ausgebildet zum Erfassen der Ausrichtung einer G-Belastung auf das Fahrzeug, d.h. der Richtung des resultierenden Vektors der aktuellen G-Belastung. Vorzugsweise umfasst das Fahrzeug zudem eine Steuereinrichtung, welche mit dem wenigstens einen Beschleunigungssensor gekoppelt ist und welche die Raumlage des resultierenden Vektors der aktuellen G-Belastung mit der Lage und Neigung des Fahrzeugs vergleicht. Vorzugsweise ist diese Steuereinrichtung mit dem Flüssigkeits-Steuerventil wirkverbunden um den Öffnungsgrad dieses Steuerventils anhand des Vergleichs der Raumlage des resultierenden Vektors der aktuellen G-Belastung mit der Lage und Neigung des Fahrzeugs zu regeln. Das zumindest eine Flüssigkeits-Steuerventil eines jeweiligen Einarmschwingen-Paars der Radaufhängung wird in Abhängigkeit der durch den Beschleunigungssensor erfassten Ausrichtung der G-Belastung auf das Fahrzeug angesteuert. Gleich der Fahrt auf einem Motorrad kann das Fahrzeug geneigt werden um die Raumlage des resultierenden Vektors der aktuellen G-Belastung mit der Lage und Neigung des Fahrzeugs in Übereinstimmung zu halten. Zusätzlich kann vorgesehen sein, dass die Neigung z.B. bei einem Stillstand des Fahrzeugs, einer Geradeausfahrt des Fahrzeugs oder einer Kurvenfahrt des Fahrzeugs mit sehr geringen Geschwindigkeiten (z.B. < 3 km/h), blockiert wird.

Vorzugweise umfasst das Fahrzeug ferner wenigstens einen Lagesensor zum jeweiligen Erfassen der Lage der jeweiligen Hydraulikzylinder, wenigstens einen Fahrzeuglagesensor zum Erfassen der Fahrzeuglage zumindest in Relation zur Horizontalen bzw. Vertikalen. Vorzugsweise sind diese Lagesensoren mit der Steuereinrichtung gekoppelt. Wird beispielsweise mittels der Lagesensoren erfasst, dass die Hydraulikzylinder eines jeweiligen Einarmschwingen-Paars identisch ausgefahren sind, so wird, bei gleichzeitiger Erfassung einer Geschwindigkeit des Fahrzeugs unterhalb von einem vorgegebenen Geschwindigkeitswert (z.B. 3 km/h), die Neigung automatisch blockiert. Diese Funktionen sind bei geeigneter Auslegung des Fahrzeugs auch ohne Lagesensoren zum Erfassen der Fahrzeuglage möglich.

Vorzugsweise umfasst das Fahrzeug ferner eine Pumpe und einen Flüssigkeitsspeicher, wobei die Pumpe zwischen dem Flüssigkeitsspeicher und der Flüssigkeitsleitung verbunden ist und dazu ansteuerbar ist, zusätzliche Flüssigkeit aus dem Flüssigkeitsspeicher in die Flüssigkeitsleitung zu überführen oder Flüssigkeit aus der Flüssigkeitsleitung in den Flüssigkeitsspeicher zu überführen. In dieser Ausführungsform kann das geschlossene System, welches durch die aktiven Kammern von jeweils zugeordneten Hydraulikzylindern und die Flüssigkeitsleitung aufgebaut ist, mit einem erhöhten Druck beaufschlagt werden. Hieraus resultierend können die Neigungswinkel der jeweiligen Einarmschwingen in Relation zum tragenden Fahrzeugelement autonom eingestellt werden, mit dem Resultat, dass das tragenden Fahrzeugelement in Relation zu den Rädern weiter angehoben oder weiter abgesenkt werden kann. Durch diese Einstellung kann insgesamt die Bodenfreiheit des Fahrzeugs angepasst werden. Ferner kann das Fahrzeug lediglich mittels Knopfdruck aufgerichtet werden. In dieser Ausführungsform ist, in einem Fall, bei welchem die zuvor beschriebene Fluidleitung zwischen den passiven Kammern verlegt ist, diese Fluidleitung mit wenigstens einer Öffnung und/oder einer Ausgleichsvorrichtung (nicht gezeigt) versehen, durch welche ein Druckausgleich mit dem Aussendruck ermöglicht wird.

Die zuvor genannte Aufgabe wird zudem durch ein dreirädriges Motorfahrzeug mit einer Radaufhängung nach einem der Ansprüche 1 bis 17 gelöst, welche die gegenseitige Ausrichtung der Vorderradachsen und/oder Hinterradachsen in Abhängigkeit einer Fahrzeugneigung verändert. Ein solches dreirädriges Motorfahrzeug kann bei Kurvenfahrten zuverlässig in Richtung zum Kurveninneren geneigt werden, wobei in jeder Fahrsituation ein zuverlässiger Bodenkontakt zwischen den Rädern und der Fahrbahnoberfläche sichergestellt wird. Es wird ausdrücklich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

Im Folgenden wird die vorliegende Erfindung anhand von in der Zeichnung dargestellten Ausführungsbeispielen weiter erläutert. Dabei zeigen:
- Fig. 1: eine schematische Darstellung einer Radaufhängung in einer ersten beispielhaften Konfiguration;
- Fig. 2: eine schematische Darstellung einer Radaufhängung in einer zweiten beispielhaften Konfiguration;
- Fig. 3a-c: schematische Darstellungen in unterschiedlichen Ansichten von einer Radaufhängung in einer dritten beispielhaften Konfiguration;
- Fig. 4: eine schematische Darstellung einer Radaufhängung in einer vierten beispielhaften Konfiguration;
- Fig. 5: eine schematische Darstellung einer Radaufhängung in einer fünften beispielhaften Konfiguration;
- Fig. 6: eine schematische Darstellung einer Radaufhängung in einer sechsten beispielhaften Konfiguration;
- Fig. 7: eine schematische Darstellung einer Radaufhängung in einer siebten beispielhaften Konfiguration; und
- Fig. 8: eine schematische Darstellung einer Radaufhängung in einer achten beispielhaften Konfiguration.

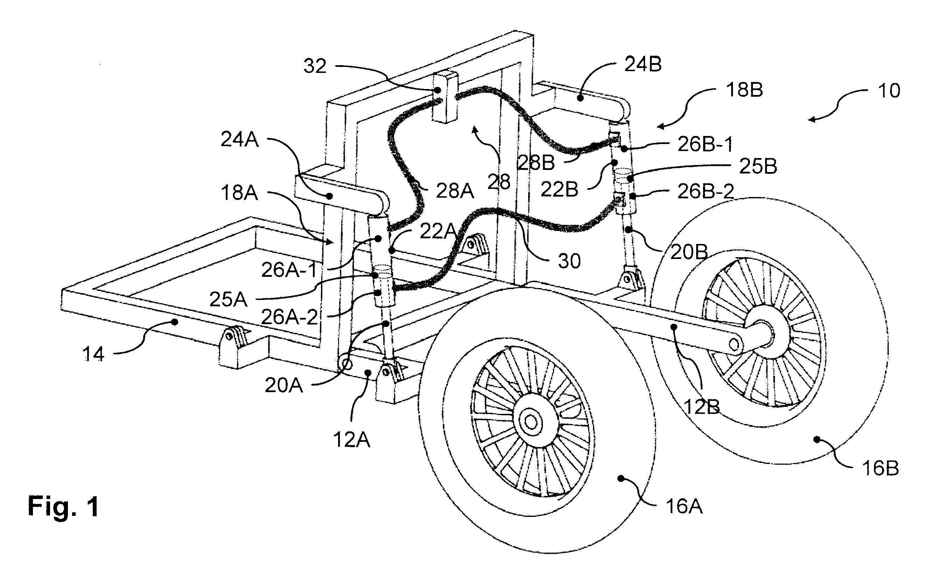

Über die gesamte Zeichnung hinweg sind gleichen Bauteilen oder Elementen die gleichen Bezugszeichen zugesprochen. Fig. 1 zeigt eine schematische Darstellung einer Radaufhängung 10 in einer ersten beispielhaften Konfiguration. Die Radaufhängung 10 umfasst ein Paar von Einarmschwingen 12A,12B, welche jeweils mit ihrem ersten Ende separat an einem tragenden Fahrzeugelement 14, z.B. ein Rahmenelement, ein Chassis, usw., eines Fahrzeugs (nicht gezeigt) angelenkt sind. An dem weiteren Ende der jeweiligen Einarmschwingen 12A,12B sind jeweils Räder 16A, 16B drehbar befestigt. Ferner ist jeder Einarmschwinge 12A, 12B ein Hydraulikzylinder 18A,18B zugeordnet. Hierbei ist jeder Hydraulikzylinder 18A,18B sowohl an der jeweiligen Einarmschwinge 12A,12B als auch am tragenden Fahrzeugelement 14 angelenkt. In dem in Fig. 1 gezeigten Beispiel ist ein distales Ende einer Kolbenstange 20A,20B des jeweiligen Hydraulikzylinders 18A,18B an einem Abschnitt einer jeweiligen Einarmschwinge 12A,12B angelenkt. Ferner ist jeweils ein Hydraulikzylinder 18A,18B an einem Abschnitt eines mit dem tragenden Fahrzeugelement 14 fest verbundenen Auslegers 24A,24B angelenkt. Selbstverständlich können die Hydraulikzylinders 18A,18B auch in umgekehrter Ausrichtung zwischen der jeweiligen Einarmschwinge 12A,12B und dem tragenden Fahrzeugelement 14 verbunden sein. Alternativ kann auf die Ausleger 24A,24B verzichtet werden und die jeweiligen Hydraulikzylinder 18A,18B können direkt am tragenden Fahrzeugelement 14 angelenkt sein (nicht gezeigt).

Jeder Hydraulikzylinder 18A,18B ist durch einen beweglichen Kolben 25A,25B (durch gestrichelte Linien schematisch gezeigt), welcher innerhalb der Zylinderkammer 22A,22B eines jeweiligen Hydraulikzylinders 18A,18B beweglich verstellbar ist, fluiddicht in zwei Kammern 26A-1,26A-2 sowie 26B-1,26B-2 unterteilt. Eine erste Kammer 26A-1,26B-1 der beiden Kammern der jeweiligen Hydraulikzylinder 18A,18B ist durch eine aktive Funktion gekennzeichnet. Eine zweite Kammer 26A-2,26B-2 der jeweiligen Hydraulikzylinder 18A,18B ist durch eine passive Funktion gekennzeichnet. Die jeweils aktiven Kammern 26A-1,26B-1 sind flüssigkeitsgefüllt. Als Beispiel einer hierzu geeigneten, inkompressiblen Flüssigkeit kann Hydrauliköl aufgezählt werden.

Die jeweiligen aktiven Kammern 26A-1,26B-1 der Hydraulikzylinder 18A,18B eines Einarmschwingen-Paars 12A,12B sind über eine Flüssigkeitsleitung 28 miteinander verbunden, welche in der in Fig. 1 gezeigten Variante aus zwei Abschnitten 28A,28B zusammengesetzt ist (im Folgenden wird hierauf detailliert eingegangen). Somit kommunizieren die aktiven Kammern 26A-1,26B-1 miteinander in einem geschlossenen System über die Flüssigkeitsleitung 28. Durch diese Ausgestaltung werden Bewegungen des Kolbens 25A des ersten Hydraulikzylinders 18A in entsprechende Gegenbewegungen des Kolbens 25B des zweiten Hydraulikzylinders 18B überführt. Umgekehrt werden selbstverständlich Bewegungen des Kolbens 25B des zweiten Hydraulikzylinders 18B in entsprechende Gegenbewegungen des Kolbens 25A des ersten Hydraulikzylinders 18A überführt.

Die passiven Kammern 26A-2,26B-2 der beiden Hydraulikzylinder 18A,18B sind fluidgefüllt. Hierbei übt das Fluid in den passiven Kammern 26A-2,26B-2 eine Kraft auf die Rückseiten der Kolben 25A,25B aus, die im Wesentlichen der Kraft entspricht, die durch den Druck der Umgebungsluft ausgeübt wird. Hierdurch werden vorteilhafterweise die Positionen der jeweiligen Kolben 25A,25B unwesentlich durch die passiven Kammern 26A-2,26B-2 beeinflusst. Genauer gesagt, werden in den passiven Kammern 26A-2,26B-2 weder Überdruck noch Unterdruck in Relation zum Druck der Umgebungsluft erzeugt. Dieses Merkmal hat zur Folge, dass durch die passiven Kammern 26A-2,26B-2 keinerlei Störkräfte an die Kolben 25A,25B angelegt werden. Um ferner vorteilhafterweise ein Eindringen von Fremdpartikeln, z.B. Schmutz oder Staub, oder von Wasser in die passiven Kammern 26A-2,26B-2 zu verhindern, sind diese Kammern 26A-2,26B-2 über eine Fluidleitung 30 verbunden, über welche die passiven Kammern 26A-2,26B-2 miteinander kommunizieren. Die Fluidleitung 30 kann zumindest eine Durchgangsöffnung umfassen, um einen Druckaustausch mit dem Druck der Aussenumgebung herzustellen.

In einer weiteren Variante umfassen die Hydraulikzylinder 18A,18B jeweils einen den passiven Kammern 26A-2,26B-2 zugeordneten Luftfilter (nicht gezeigt), über welchen die passiven Kammern 26A-2,26B-2 mit der Umgebungsluft individuell kommunizieren. Hierdurch wird weiterhin gewährleistet, dass durch das Gas in den passiven Kammern (z.B. Luft) keinerlei Kraft auf die Rückseite der Kolben 25A,25B ausgeübt wird, welche Kraft sich von der durch den Druck der Umgebungsluft ausgeübten Kraft unterscheidet. Somit werden Positionen der Kolben 25A,25B nicht durch die passiven Kammern 26A-2,26B-2 beeinflusst. Gleichzeitig treten keinerlei Fremdpartikel oder Flüssigkeiten in die passiven Kammern 26A-2,26B-2 ein.

Die in Fig. 1 gezeigte Radaufhängung 10 umfasst ferner ein Flüssigkeits-Steuerventil 32, welches in der Flüssigkeitsleitung 28 zwischengeordnet ist. Hierdurch wird die Flüssigkeitsleitung 28 in die zwei Abschnitte 28A,28B unterteilt, nämlich in einen ersten Abschnitt 28A, welcher zwischen der aktiven Kammer 26A-1 des ersten Hydraulikzylinders 18A und dem Flüssigkeits-Steuerventil 32 verläuft, und in einen zweiten Abschnitt 28B, welcher zwischen der aktiven Kammern 26B-1 des zweiten Hydraulikzylinders 18B und dem Flüssigkeits-Steuerventil 32 verläuft. Das Flüssigkeits-Steuerventil 32 ist dazu ansteuerbar, den Flüssigkeitsaustausch zwischen den beiden aktiven Kammern 26A-1,26B-1 zu steuern. Bei einem derartigen Ansteuern des Flüssigkeits-Steuerventils 32 zum Blockieren des Flüssigkeitsaustausches innerhalb der Flüssigkeitsleitung 28 werden die Gegenbewegungen der Kolben 25A,25B innerhalb der Hydraulikzylinder 18A,18B unterbunden. Mit zunehmender Erweiterung des Öffnungsgrades des Flüssigkeits-Steuerventils 32 werden die Gegenbewegungen der beiden Kolben 25A,25B verstärkt leichtgängig. Hierdurch werden entsprechende Neigungen der Einarmschwingen 12A,12B in Relation zum tragenden Fahrzeugelement 14 freigegeben. Mit anderen Worten, kann ein mit der Radaufhängung 10 bereitgestelltes Fahrzeug (nicht gezeigt) im Verlaufe von Kurvenfahrten in Richtung zum Kurveninneren einfach geneigt werden. Um bei dem Fahrzeug im aufgerichteten Zustand eine jegliche Neigung zu verhindern, wird das Flüssigkeits-Steuerventil 32 geschlossen, sodass ein Flüssigkeitsaustausch innerhalb der Flüssigkeitsleitung 28 blockiert wird. Selbstverständlich kann die Lage der Hydraulikzylinder verändert und um beispielsweise 180° gedreht werden.

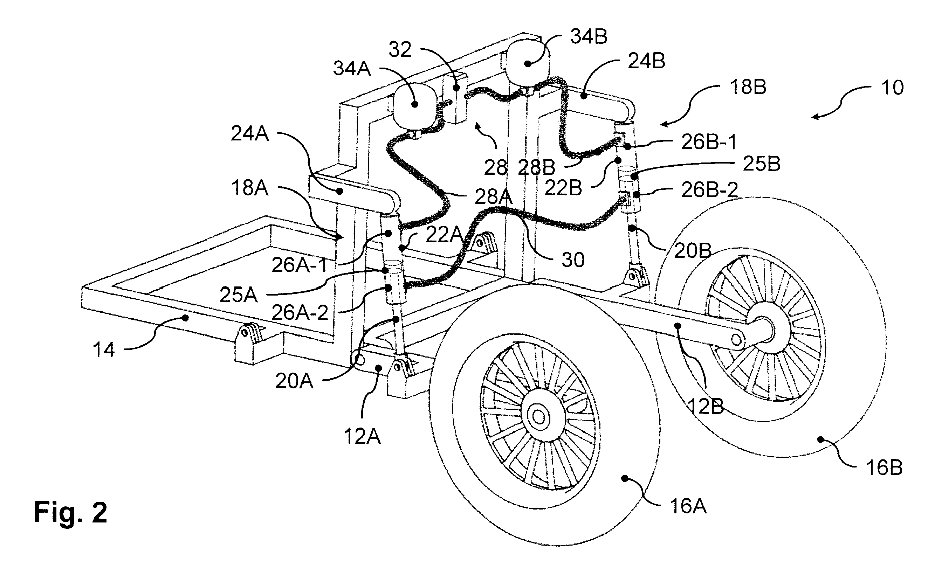

Die Fig. 2 zeigt eine schematische Darstellung von einer Radaufhängung 10 in einer zweiten Konfiguration. Diese Radaufhängung 10 unterscheidet sich dahingehend von der in Fig. 1 gezeigten Radaufhängung, dass zusätzlich zwei Dämpfungseinheiten 34A,34B umfasst sind. Hierbei sind die jeweiligen Eingänge der Dämpfungseinheiten 34A,34B jeweils mit den Abschnitten 28A,28B der Flüssigkeitsleitung 28 verbunden, welche durch das zuvor genannte Flüssigkeits-Steuerventil 32 in die Abschnitte 28A, 28B unterteilt ist. Mit anderen Worten, ist eine erste Dämpfungseinheit 34A mit dem Abschnitt 28A der Flüssigkeitsleitung 28 verbunden, welcher zwischen der aktiven Kammer 26A-1 des ersten Hydraulikzylinders 18A und dem Flüssigkeits-Steuerventil 32 verläuft. Ferner ist eine zweite Dämpfungseinheit 34B mit dem Abschnitt 28B der Flüssigkeitsleitung 28 verbunden, welcher zwischen der aktiven Kammer 26B-1 des zweiten Hydraulikzylinders 18B und dem Flüssigkeits-Steuerventil 32 verläuft. Durch die Bereitstellung der zwischengeordneten Dämpfungseinheiten 34A,34B werden feinere Hübe der Kolben 25A,25B innerhalb der Hydraulikzylinder 18A,18B erzielt. Gleichzeitig übernehmen die Dämpfungseinheiten 34A,34B eine Funktion zur Dämpfung einer Bewegung der Einarmschwingen 12A,12B in Relation zum tragenden Fahrzeugelement 14. Hierdurch werden Stösse, welche an die Räder 16A,16B angelegt werden, zuverlässiger absorbiert und gedämpft. Hierdurch wird der Fahrkomfort erhöht. Auch in dieser zweiten Ausführungsform könnte auf die Ausleger 24A,24B verzichtet werden. Selbstverständlich kann die Lage der Hydraulikzylinder verändert und um beispielsweise 180° gedreht werden.

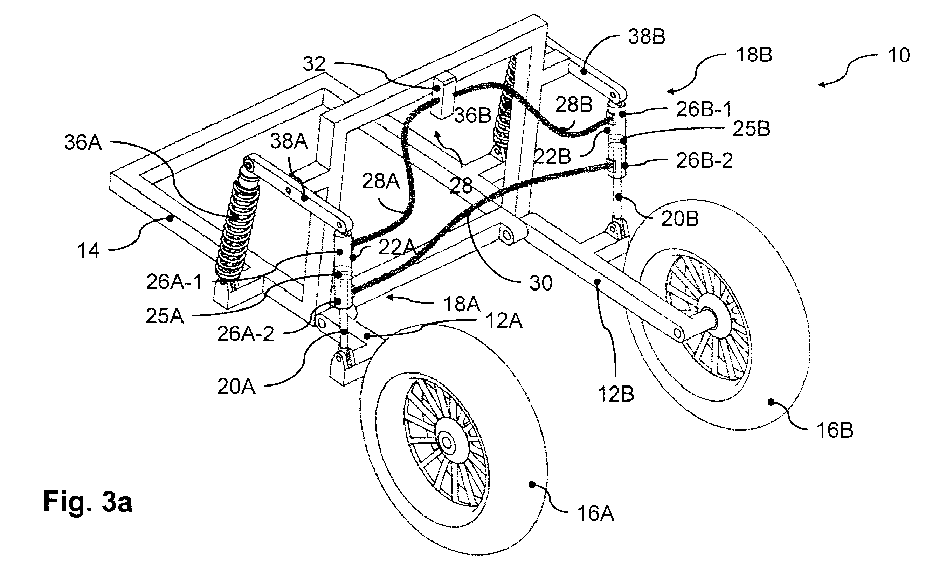

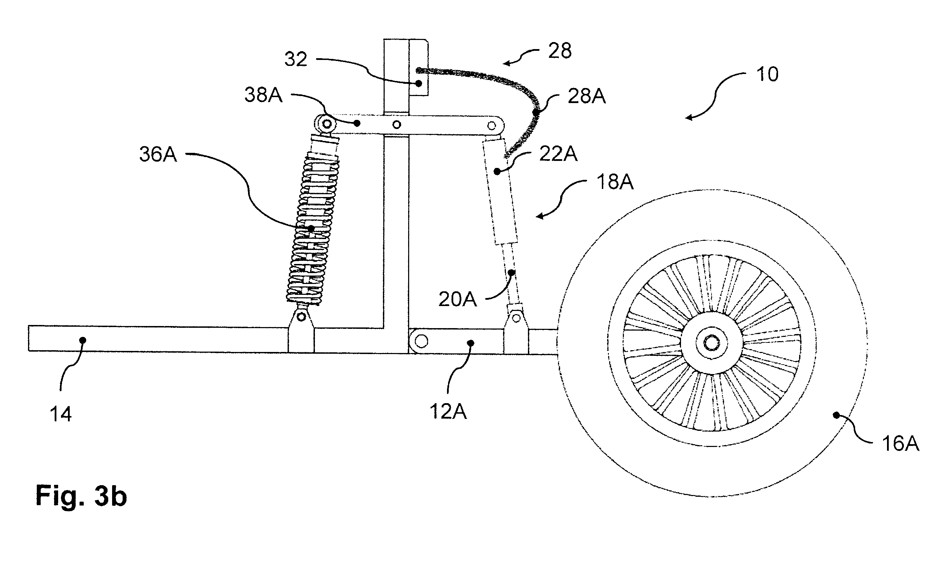

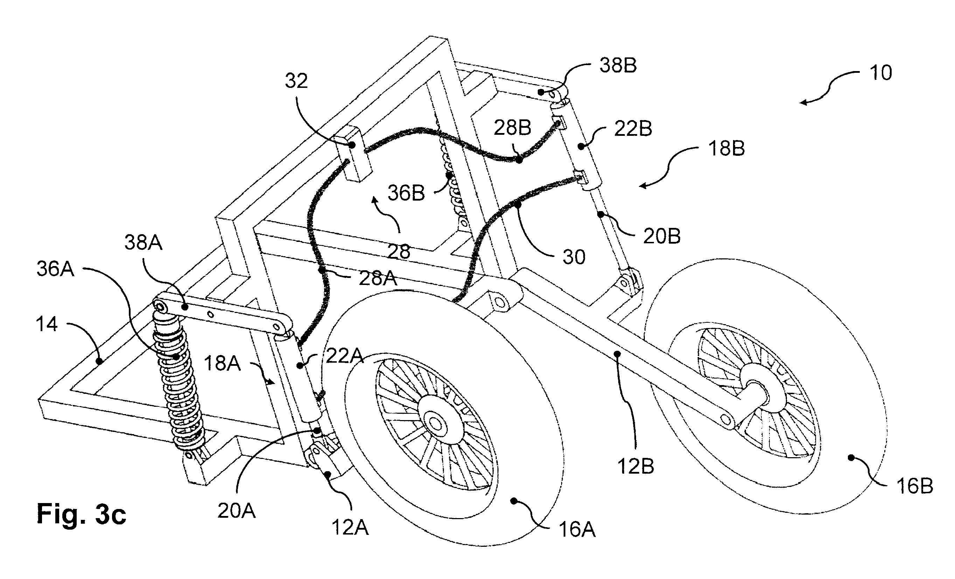

Die Figuren 3a-c zeigen unterschiedliche Ansichten der Radaufhängung 10 in einer dritten Variante. Fig. 3a zeigt die Radaufhängung 10 in einer Perspektivdarstellung in neutraler Position, bzw. bei blockierter Neigung. Fig. 3b zeigt eine Seitenansicht der in Fig. 3a dargestellten Radaufhängung 10. Fig. 3c zeigt eine Perspektivansicht der in Figuren 3a,b gezeigten Radaufhängung 10 bei freigegebener Neigung des Fahrzeugs. Zusätzlich zu der in Fig. 1 gezeigten Radaufhängung umfasst die in Figuren 3a-c gezeigte Radaufhängung 10 ein Paar von Stossdämpfern 36A,36B zum Absorbieren und Dämpfen von Stössen, welche an die Räder 16A,16B angelegt werden. Hierbei ist ein Stossdämpfer 36A,36B jeweils einer Einarmschwinge 12A,12B zugeordnet. Ferner sind die Stossdämpfer 36A,36B jeweils mit dem tragenden Fahrzeugelement 14 und den jeweiligen Einarmschwingen 12A,12B verbunden.

Die in Figuren 3a-c dargestellte Radaufhängung 10 umfasst ferner ein Paar von Hebelelementen 38A,38B, welche jeweils einer Einarmschwinge 12A,12B zugeordnet sind und schwenkbar am tragenden Fahrzeugelement 14 angebracht sind. Jeweilige Enden des ersten und zweiten Hydraulikzylinders 18a,18b und des ersten und zweiten Stossdämpfers 36A,36B sind an zueinander gegenüberliegenden Abschnitten der beiden Hebelelemente 38A,38B angelenkt. Ferner sind die weiteren Enden der beiden Hydraulikzylinder 18A,18B an einer jeweils zugeordneten Einarmschwinge 12A,12B angelenkt. Des Weiteren sind die jeweiligen weiteren Enden der beiden Stossdämpfer 36A,36B jeweils am tragenden Fahrzeugelement 14 angelenkt. Somit sind die beiden Hydraulikzylinder 18A,18B über die jeweils zugeordneten Hebelelemente 38A,38B mit den jeweiligen Stossdämpfern 36A,36B verbunden. Durch diese Konfiguration ist eine separate Absorption und Dämpfung von Stössen auf die Räder 16A,16B gewährleistet, und zwar unabhängig davon, ob sich das Fahrzeug in der aufgerichteten Position befindet, bzw. die Neigung blockiert ist (siehe Figuren 3a, b), oder in der geneigten Position befindet (siehe Fig. 3c), bzw. die Neigung freigegeben ist. Somit ist, unabhängig von der jeweiligen Neigungscharakteristik des Fahrzeugs und unabhängig davon, ob die Neigung blockiert ist oder nicht, stets ein zuverlässiger Bodenkontakt zwischen den Rädern 16A,16B und der Fahrbahnoberfläche gewährleistet. Selbstverständlich können die Hydraulikzylinder 18A,18B und Stossdämpfer 36A,36B in ihrer Anordnung vertauscht und/oder um beispielsweise 180° gedreht werden.

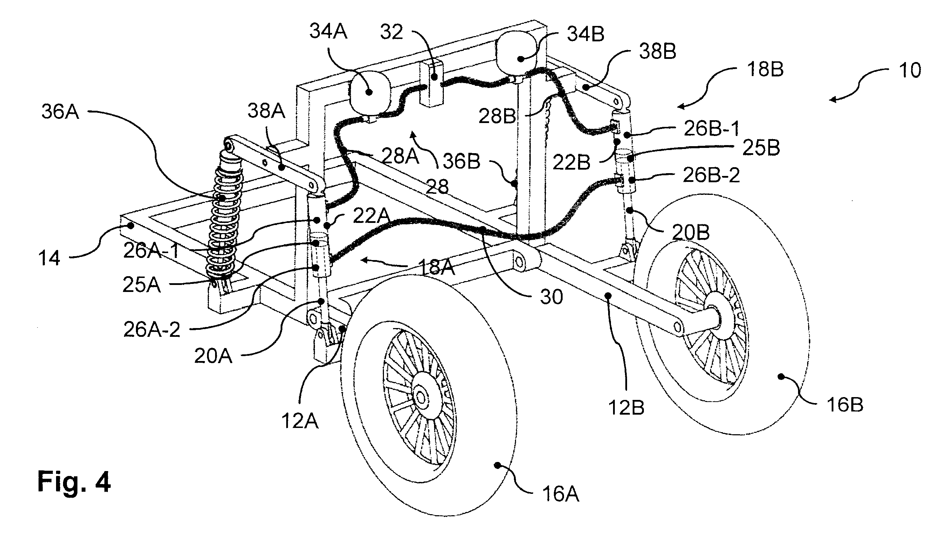

Die Fig. 4 zeigt eine schematische Darstellung der Radaufhängung 10 in einer weiteren Variante. Diese Radaufhängung 10 unterscheidet sich dahingehend von der in Figuren 3a-c gezeigten Radaufhängung, dass zusätzlich die in Fig. 2 gezeigten Dämpfungseinheiten 34A,34B jeweils an der Flüssigkeitsleitung 28 angeschlossen sind. Hierbei sind die Dämpfungseinheiten 34A,34B mit den durch das Flüssigkeits-Steuerventil 32 unterteilten Abschnitten 28A,28B der Flüssigkeitsleitung 28 verbunden. Zusätzlich zu den Stossdämpfern 36A,36B, stellen die Dämpfungseinheiten 34A,34B eine Dämpfung bereit, um hierdurch Stösse, welche an die Räder 16A,16B angelegt werden, zuverlässig zu absorbieren und zu dämpfen. Das Flüssigkeits-Steuerventil 32 ist motorisch oder manuell ansteuerbar.

Ferner ist das Flüssigkeits-Steuerventil 32 dazu ausgebildet, einen Flüssigkeitsaustausch zwischen den aktiven Kammern 26A-1,26B-1 der beiden Hydraulikzylinder 18A,18B mit zunehmender Erstreckung des Kolbens 25A,25B in die Zylinderkammer 22A,22B herein oder aus dieser heraus progressiv zu reduzieren. Hierdurch kann die Neigungscharakteristik des Fahrzeugs individuell angepasst werden. Das Flüssigkeits-Steuerventil 32 wird hierbei langsam geschlossen, wenn sich die Neigung einer der beiden Einarmschwingen 12A,12B in Relation zum tragenden Fahrzeugelement 14 einer vorbestimmten maximalen Neigung bzw. einem Neigungsanschlag annähert, um somit progressiv eine weitergehende Neigung zu verlangsamen bzw. zu reduzieren. Hierdurch wird die Neigung des Fahrzeugs progressiv mit zunehmender Annäherung an die maximale Neigung reduziert.

Das Flüssigkeits-Steuerventil 32 kann wiederum in der Gegenrichtung, d.h. die Richtung zum Aufrichten des Fahrzeugs, komplett geöffnet werden, um dem Aufrichten des Fahrzeugs einen so gering wie möglichen Widerstand entgegenzusetzen. Somit wird die Bewegung zum Aufrichten des Fahrzeugs unverzüglich freigegeben.

Obwohl in den Figuren nicht gezeigt, kann das Flüssigkeits-Steuerventil 32 ausgelassen werden. Um hierbei dennoch eine gewünschte Neigungscharakteristik zu erzielen, können mechanische Bremsen (nicht gezeigt) vorgesehen sein, welche jeweils zwischen dem tragenden Fahrzeugelement 14 und den Einarmschwingen 12A,12B derart angeordnet sind, dass eine Schwenkbewegung der Einarmschwingen 12A,12B in Relation zum tragenden Fahrzeugelement 14 gebremst, blockiert (neutrale Position) oder freigegeben wird. Hierdurch ist eine individuelle Ansteuerung des jeweiligen Hubes der Hydraulikzylinder 18A, 18B gewährleistet. Die mechanischen Bremsen können jeweils einem Hydraulikzylinder 18A,18B zugeordnet sein und ferner dazu ansteuerbar sein, eine Bewegung der jeweiligen Kolbenstangen 20A,20B in Relation zum Zylinder 22A,22B zu bremsen, zu blockieren oder freizugeben. Selbstverständlich können die Hydraulikzylinder 18A,18B und Stossdämpfer 36A,36B in ihrer Anordnung vertauscht und/oder um beispielsweise 180° gedreht werden.

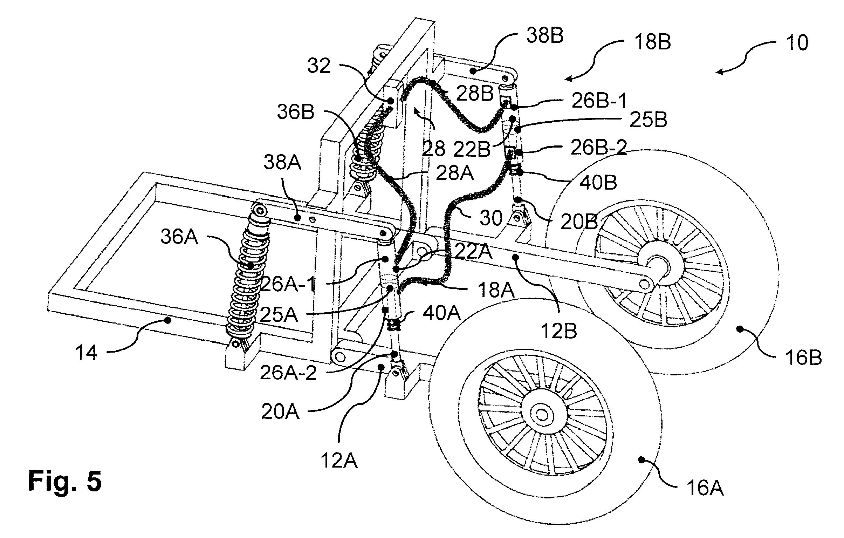

Fig. 5 zeigt eine schematische Darstellung der Radaufhängung 10 in einer fünften Variante. Diese Radaufhängung 10 unterscheidet sich dahingehend von der in Figuren 3a-c gezeigten Konfiguration der Radaufhängung, dass zusätzlich ein Paar von Federelementen 40A,40B bereitgestellt ist, um individuell eine Rückstellkraft zwischen dem tragenden Fahrzeugelement 14 und den jeweiligen Einarmschwingen 12A,12B anzulegen. Wie in Fig. 5 gezeigt, können die Federelemente 40A,40B hierzu wenigstens abschnittsweise auf den ausserhalb der Zylinder 22A,22B erstreckten Abschnitten der Kolbenstangen 20A,20B aufgesteckt sein. Sobald die Neigung einer der Einarmschwingen 12A,12B in Relation zum tragenden Fahrzeugelement 14 einen vorbestimmten Neigungswinkel erreicht, schlägt ein ansonsten freiliegender Endabschnitt von einem der Federelemente 40A,40B gegen diese Einarmschwinge (direkt oder indirekt) an. Hierdurch wird eine entgegengesetzte Rückstellkraft zwischen dieser Einarmschwinge und dem tragenden Fahrzeugelement 14 angelegt. Somit kann insgesamt das Aufrichten des Fahrzeugs unterstützt werden.

Obwohl in der Zeichnung nicht gezeigt, können pro Hydraulikzylinder 18A,18B auch mehr als jeweils ein Federelement 40A,40B bereitgestellt sein. Beispielsweise können bei allen Ausführungsformen zwei oder mehr Federelemente pro Hydraulikzylinder 18A,18B vorgesehen sein, welche eine unterschiedliche Federkonstante haben. So können die jeweiligen Federn mit geringerer Federkonstante eine leichte entgegengesetzte Rückstellkraft zwischen der Einarmschwinge und dem tragenden Fahrzeugelement 14 anlegen, und können Federn mit grösserer Federkonstante, bei fortgeschrittener Neigung des Fahrzeugs, eine grössere entgegengesetzte Rückstellkraft hierzwischen anlegen. Somit wird eine entgegengesetzte Rückstellkraft angelegt, welche progressive Eigenschaft hat.

Obwohl in der Fig. 5 nicht gezeigt, können die Federelemente 40A,40B wenigstens abschnittsweise innerhalb der aktiven Kammern 26A-1,26B-1 oder der passiven Kammern 26A-2,26B-2 angeordnet sein. Ferner kann vorgesehen sein, dass die Federelemente 40A,40B parallel zu einem jeweiligen Hydraulikzylinder 18A,18B zwischen dem tragenden Fahrzeugelement 14 und der jeweiligen Einarmschwinge 12A,12B verbunden sind. Die in Fig. 5 gezeigten Federelemente 40A,40B sind als eine mechanische Feder ausgeführt. Alternativ können die Federelemente als Gasfeder, oder als Kombination von mechanischen Federn und Gasfedern ausgeführt sein.

Obwohl in der Zeichnung nicht gezeigt, können die Hydraulikzylinder 18A,18B jeweils zwischen einem Abschnitt einer jeweils zugeordneten Einarmschwinge 12A,12B und dem tragenden Fahrzeugelement 14 angelenkt sein. Die Einarmschwingen 12A,12B können wiederum schwenkbar mit dem tragenden Fahrzeugelement 14 verbunden sein. Ferner können die Stossdämpfer 36A,36B jeweils zwischen einem weiteren Abschnitt einer jeweiligen Einarmschwinge 12A,12B und dem tragenden Fahrzeugelement 14 angelenkt sein. Mit anderen Worten, sind die Stossdämpfer 36A,36B zwischen einem über den Anlenkpunkt der Einarmschwinge 12A,12B am tragenden Fahrzeugelement 14 verlängerten Abschnitt der Einarmschwinge 12A,12B und dem tragenden Fahrzeugelement 14 verbunden. In diesem Beispiel sind die Hydraulikzylinder 18A,18B unter Zug beansprucht. Die Anordnung zwischen Hydraulikzylinder 18A,18B und Stossdämpfer 36A,36B kann auch vertauscht sein, sodass die Hydraulikzylinder 18A,18B jeweils zwischen dem verlängerten Abschnitt der Einarmschwingen 12A,12B und dem tragenden Fahrzeugelement 14 angeordnet und die Stossdämpfer 36A,36B jeweils zwischen dem tragenden Fahrzeugelement 14 und dem die Räder 16A,16B tragenden Teil der jeweiligen Einarmschwingen 12A,12B angeordnet sind. Beispielsweise ist jedoch die Anordnung der Hydraulikzylinder 18A,18B und Stossdämpfer 36A,36B auf beiden Einarmschwingen 12A,12B eines Einarmschwingen-Paars dieselbe. In dieser (ebenfalls nicht gezeigten) Anordnung sind die Hydraulikzylinder 18A,18B unter Druck beansprucht. In diesem Beispiel sind die jeweiligen Enden der Hydraulikzylinder 18A,18B und der Stossdämpfer 36A,36B jeweils ohne das in den Figuren 3a-c, 4, 5 und 6 gezeigte Hebelelement 38A,38B direkt mit den Einarmschwingen 12A,12B verbunden. Hierdurch ist die mechanische Belastbarkeit erhöht. Zudem werden Kosten und Gewicht eingespart. Diese Ausführungsform ist weniger bevorzugt, weil die Richtungen der Bewegung der Hydraulikzylinder und der Stossdämpfer (Arbeitsrichtung) zueinander nicht parallel, nicht entlang einer Linie und nicht in gleicher Richtung verlaufen. Zudem wirken in diesem weniger bevorzugten Beispiel die Hydraulikzylinder nicht unabhängig von den Stossdämpfern. Selbstverständlich können die Hydraulikzylinder 18A,18B und Stossdämpfer 36A,36B in ihrer Anordnung vertauscht und/oder um beispielsweise 180° gedreht werden.

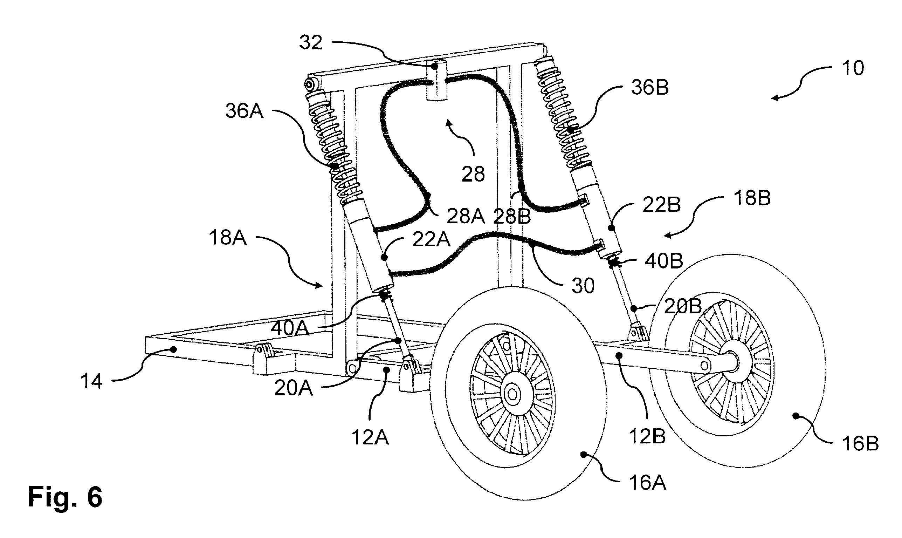

Die Fig. 6 zeigt eine Radaufhängung 10, bei welcher die Hydraulikzylinder 18A,18B und die Stossdämpfer 36A,36B jeweils paarweise zueinander seriell angeordnet sind. In der gezeigten Ausführungsform sind die Hydraulikzylinder 18A,18B jeweils an den Einarmschwingen 12A,12B angelenkt und die Stossdämpfer 36A,36B jeweils am tragenden Fahrzeugelement 14 angelenkt. Ferner sind die Hydraulikzylinder 18A,18B an ihren weiteren Enden direkt (starr) mit den Stossdämpfern 36A,36B verbunden. Obwohl in der Figur nicht gezeigt, können Hydraulikzylinder 18A,18B und Stossdämpfer 36A,36B in ihrer Anordnung vertauscht werden. Durch diese Anordnung werden die Einarmschwingen 12A,12B gemäss den zuvor beschriebenen Ausführungsformen mittels der Hydraulikzylinder 18A,18B der Neigung des Fahrzeugs entsprechend ausgelenkt. Ferner werden Stösse auf die Räder 16A,16B durch die seriell nachgeschalteten Stossdämpfer 36A,36B zuverlässig absorbiert.

Die Absorption der Stösse geschieht hierbei ganz unabhängig von der jeweiligen Stellung der Hydraulikzylinder 18A,18B, bzw. von der Neigung des Fahrzeugs. Die den jeweiligen Einarmschwingen 12A,12B zugewandten Enden der Hydraulikzylinder 18A,18B sind jeweils mit den Federelementen 40A,40B bestückt. Durch die serielle Anordnung zwischen Hydraulikzylinder 18A,18B und Stossdämpfer 36A,36B können zwischengeordnete Bauteile, wie beispielsweise das zuvor genannte Hebelelement (siehe Figuren 3a-3c, 4 und 5) eingespart werden. Hierdurch werden Kosten und Gewicht eingespart. Ein weiterer Vorteil besteht darin, dass sich die Hydraulikzylinder 18A,18B und Stossdämpfer 36A,36B jeweils paarweise entlang einer Linie bewegen, bzw. entlang einer gemeinsamen Achse arbeiten. Hierdurch wird ein insgesamt verbessertes Zusammenspiel erreicht. Selbstverständlich können die Hydraulikzylinder 18A,18B und Stossdämpfer 36A,36B in ihrer Anordnung vertauscht und/oder um beispielsweise 180° gedreht werden.

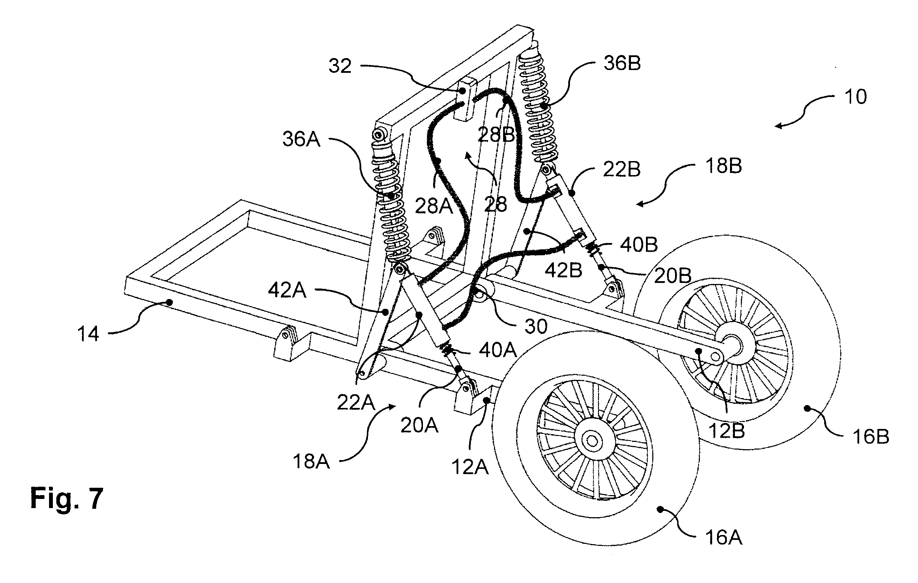

In Fig. 7 ist eine Radaufhängung 10 in einer weiteren Ausführungsform gezeigt. Diese Ausführungsform unterscheidet sich von der in Fig. 6 gezeigten Ausführungsform darin, dass die jeweils paarweise zugeordneten Hydraulikzylinder 18A,18B und Stossdämpfer 36A,36B nicht starr miteinander verbunden sind sondern gelenkig, bzw. schwenkbar aneinander angelenkt sind. An dem Gelenkpunkt sind jeweils Streben 42A,42B angelenkt. Die weiteren Enden der jeweiligen Streben 42A,42B sind wiederum am tragenden Fahrzeugelement 14 angelenkt. Die Achsen zum Anlenken der Streben 42A,42B an das tragende Fahrzeugelement 14 und die Achsen zum Anlenken der Einarmschwingen 12A,12B an das tragende Fahrzeugelement 14 verlaufen entlang einer Linie. Hierdurch können die Hydraulikzylinder 18A,18B fein arbeiten und werden zugleich Stösse auf die Räder 16A,16B zuverlässig absorbiert. Obwohl nicht gezeigt, können Hydraulikzylinder 18A,18B und Stossdämpfer 36A,36B in ihrer Anordnung vertauscht werden. Die Hydraulikzylinder 18A,18B sind jeweils an Enden, welche den jeweiligen Einarmschwingen 12A,12B zugewandt sind, mit den Federelementen 40A,40B bestückt. Die in Fig. 7 gezeigte Radaufhängung 10 ist besonders stabil und arbeitet zuverlässig. Auch starke Stösse auf die Räder 16A,16B werden zuverlässig absorbiert. Selbstverständlich können die Hydraulikzylinder 18A,18B und Stossdämpfer 36A,36B in ihrer Anordnung vertauscht und/oder um beispielsweise 180° gedreht werden.

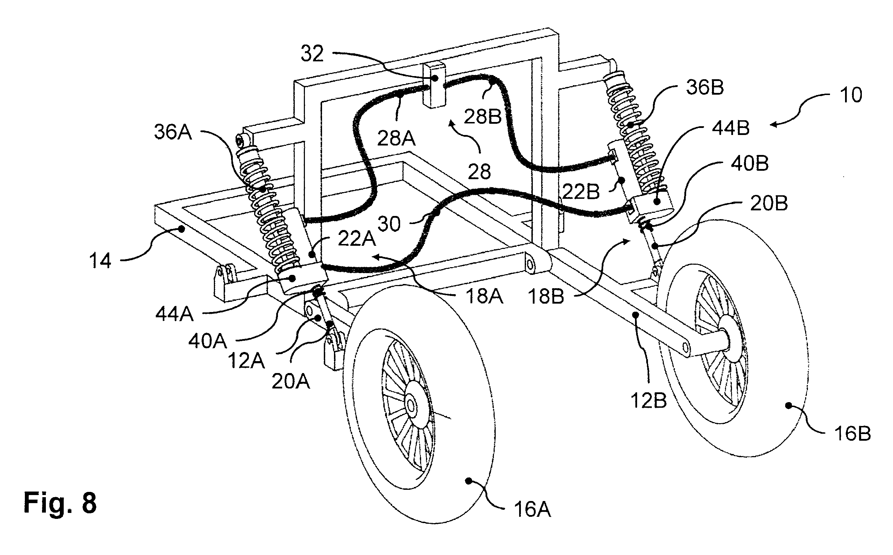

In Fig. 8 ist eine weitere vorteilhafte Ausführung der Erfindung gezeigt. Die hier gezeigt Radaufhängung 10 umfasst ebenfalls paarweise zugeordnete Hydraulikzylinder 18A,18B und Stossdämpfer 36A,36B. Die Hydraulikzylinder 18A,18B und Stossdämpfer 36A,36B sind in serieller Funktionsweise angeordnet, wobei sie aussermittig voneinander versetzt sind und sich abschnittsweise überlappen. Hydraulikzylinder 18A,18B und Stossdämpfer 36A,36B sind in dieser Anordnung starr miteinander verbunden. Die Stossdämpfer 36A,36B sind am tragenden Fahrzeugelement 14 angelenkt und an ihren weiteren Enden jeweils mit einem Bauelement 44A,44B verbunden, bzw. hierin aufgenommen. Ferner sind die Zylinderkammern 22A,22B der jeweiligen Hydraulikzylinder 18A,18B fest mit dem Bauelement 44A,44B verbunden. Die Kolbenstangen 20A,20B der jeweiligen Hydraulikzylinder 18A,18B erstrecken sich durch jeweils in die Bauelemente 44A,44B eingebrachte Aperturen. Die Enden der Kolbenstangen 20A,20B sind wiederum an den Einarmschwingen 12A,12B angelenkt. Neben dem hier aufgeführten Bauelement 44A,44B, können weitere direkte oder indirekte Verbindungsarten vorgesehen sein. Selbstverständlich können Hydraulikzylinder 18A,18B und Stossdämpfer 36A,36B in ihrer Anordnung vertauscht werden.

In dieser Ausführungsform sind die Hydraulikzylinder 18A,18B und Stossdämpfer 36A,36B seriell zueinander angeordnet. Im Gegensatz zu der in Fig. 6 gezeigten Ausführungsform mit ebenfalls serieller Anordnung, verlaufen die Achsen der Hydraulikzylinder 18A,18B und Stossdämpfer 36A,36B der in Fig. 8 gezeigten Radaufhängung 10 nicht entlang einer Linie sondern zueinander parallel. Hierdurch ist die Arbeit unbeeinträchtigt, sodass die Hydraulikzylinder 18A,18B weiterhin fein arbeiten und die Stossdämpfer 36A,36B zuverlässig Stösse absorbieren. Im Vergleich zu der in Fig. 6 gezeigten Ausführungsform ist jedoch eine kompaktere Bauform der Radaufhängung 10 erzielt.

Bei der in Fig. 8 gezeigten Ausführungsform verlaufen die jeweiligen Zylinderkammern 22A,22B und die zugeordneten Stossdämpfer 36A,36B abschnittsweise in überlappter Anordnung. Somit ist die Erstreckung der Anordnung aus Hydraulikzylinder 18A,18B und Stossdämpfer 36A,36B gegenüber der in Fig. 6 gezeigten Anordnung aus Hydraulikzylinder 18A,18B und Stossdämpfer 36A,36B um die Länge der Zylinderkammer 22A,22B in Längserstreckung reduziert. Hierdurch ist die in Fig. 8 gezeigte Radaufhängung 10 kompakter. Alternativ oder zusätzlich kann im Vergleich zu der in Fig. 6 gezeigten Radaufhängung 10 eine insgesamt grössere Auslenkung der Einarmschwingen 12A,12B erzielt werden, da Hydraulikzylinder 18A,18B mit insgesamt vergrösserter Erstreckung eingesetzt werden können. Alternativ oder zusätzlich kann der Feder-/Dämpfungsweg der Stossdämpfer 36A,36B vergrössert werden, sodass eine komfortablere Dämpfung des Fahrzeugs erreicht wird. Selbstverständlich können die Hydraulikzylinder 18A,18B und Stossdämpfer 36A,36B in ihrer Anordnung vertauscht und/oder um beispielsweise 180° gedreht werden.

Wie bereits ausgeführt, kann das Fahrzeug wenigstens einen Beschleunigungssensor, ausgebildet zum Erfassen der Ausrichtung einer G-Belastung auf das Fahrzeug, und eine Steuereinrichtung, welche mit dem wenigstens einen Beschleunigungssensor und dem Flüssigkeits-Steuerventil gekoppelt ist, umfassen. Das zumindest eine Flüssigkeits-Steuerventil eines jeweiligen Einarmschwingen-Paars der Radaufhängung wird vorzugsweise in Abhängigkeit der durch den Beschleunigungssensor erfassten Ausrichtung der G-Belastung auf das Fahrzeug genau angesteuert. Gleich der Fahrt auf einem Motorrad neigt sich das Fahrzeug derart, um diese horizontale Komponente auszugleichen. Wie zuvor beschrieben, kann die Freigabe oder Blockierung der Neigung des Fahrzeugs durch entsprechende Ansteuerung des zwischen der Flüssigkeitsleitung einer jeweiligen Radaufhängung angeordneten Flüssigkeits-Steuerventils angesteuert werden. Alternativ kann die Freigabe oder Blockierung der Neigung des Fahrzeugs durch die zuvor genannten mechanischen Bremsen gesteuert werden.

**Bezugszeichenliste**

| | | | |
|---|---|---|---|
| 10 | Radaufhängung | 28 | Flüssigkeitsleitung |
| 12A | Einarmschwinge | 28A | Abschnitt von 28 |
| 12B | Einarmschwinge | 28B | Abschnitt von 28 |
| 14 | tragendes Fahrzeugelement | 30 | Fluidleitung |
| 16A | Rad | 32 | Flüssigkeits-Steuerventil |
| 16B | Rad | 34A | Dämpfungseinheit |
| 18A | Hydraulikzylinder | 34B | Dämpfungseinheit |
| 18B | Hydraulikzylinder | 36A | Stossdämpfer |
| 20A | Kolbenstange | 36B | Stossdämpfer |
| 20B | Kolbenstange | 38A | Hebelelement |
| 22A | Zylinderkammer | 38B | Hebelelement |
| 22B | Zylinderkammer | 40A | Federelement |
| 24A | Ausleger | 40B | Federelement |
| 24B | Ausleger | 42A | Strebe |
| 25A | Kolben | 42B | Strebe |
| 25B | Kolben | 44A | Bauelement |
| 26A-1 | aktive Kammer | 44B | Bauelement |
| 26B-1 | aktive Kammer | | |
| 26A-2 | passive Kammer | | |
| 26B-2 | passive Kammer | | |

## Patentansprüche

1. Radaufhängung (10) für ein Fahrzeug mit einem tragenden Fahrzeugelement (14), wobei die Radaufhängung (10) mindestens ein Paar Einarmschwingen (12A,12B) umfasst, wobei jede der Einarmschwingen (12A,12B) separat am tragenden Fahrzeugelement (14) angelenkt ist und ein Rad (16A,16B) drehbar an der Einarmschwinge (12A,12B) befestigt ist, wobei jeder Einarmschwinge (12A,12B) ein Hydraulikzylinder (18A,18B) zugeordnet ist, welcher an der Einarmschwinge (12A,12B) und/oder an dem tragenden Fahrzeugelement (14) angelenkt ist, wobei jeder Hydraulikzylinder (18A,18B) durch einen beweglichen Kolben (25A,25B) fluiddicht in zwei Kammern unterteilt ist, **dadurch gekennzeichnet, dass** jeder Hydraulikzylinder (18A,18B) eine erste Kammer (26A-1,26B-1) mit einer aktiven Funktion und eine zweite Kammer (26A-2,26B-2) mit einer passiven Funktion umfasst, wobei die aktive Kammer (26A-1,26B-1) flüssigkeitsgefüllt ist, wobei die aktiven Kammern (26A-1,26B-1) eines Einarmschwingen-Paars (12A,12B) über eine Flüssigkeitsleitung (28) in einem geschlossenen System miteinander kommunizieren, wodurch Bewegungen des Kolbens (25A) eines ersten der Hydraulikzylinder (18A) entsprechende Gegenbewegungen des Kolbens (25B) eines zweiten der Hydraulikzylinder (18B) bewirken, und wobei die passive Kammer (26A-2,26B-2) fluidgefüllt ist, wobei das Fluid in der passiven Kammer (26A-2,26B-2) eine Kraft auf die Rückseite des Kolbens (25A,25B) ausübt, die im Wesentlichen der durch den Druck der Umgebungsluft ausgeübten Kraft entspricht und dadurch Positionen des Kolbens (25A,25B) unwesentlich beeinflusst.

2. Radaufhängung (10) nach Anspruch 1, **dadurch gekennzeichnet, dass** die Hydraulikzylinder (18A,18B) jeweils einen den passiven Kammern (26A-2,26B-2) zugeordneten Luftfilter umfassen, über welchen die passiven Kammern (26A-2,26B-2) jeweils mit der Umgebungsluft kommunizierend ausgebildet sind.

3. Radaufhängung (10) nach Anspruch 1, **dadurch gekennzeichnet, dass** diese eine den passiven Kammern (26A-2,26B-2) zugeordnete Fluidleitung (30) umfasst, über welche die passiven Kammern (26A-2,26B-2) der Hydraulikzylinder (18A,18B) eines Einarmschwingen-Paars (12A,12B) miteinander kommunizierend ausgebildet sind.

4. Radaufhängung (10) nach einem der Ansprüche 1 bis 3, **dadurch gekennzeichnet, dass** diese wenigstens eine Dämpfungseinheit (34A,34B) umfasst, deren Eingang mit der Flüssigkeitsleitung (28) verbunden ist.

5. Radaufhängung (10) nach einem der vorhergehenden Ansprüche, **dadurch gekennzeichnet, dass** diese wenigstens ein Flüssigkeits-Steuerventil (32) umfasst, welches in der Flüssigkeitsleitung (28) zwischen den aktiven Kammern der Hydraulikzylinder angeordnet ist und dazu ansteuerbar ist, den Flüssigkeitsaustausch zwischen den aktiven Kammern (26A-1,26B-1) der Hydraulikzylinder (18A,18B) eines Einarmschwingen-Paars (12A,12B) zu steuern.

6. Radaufhängung (10) nach Anspruch 5, **dadurch gekennzeichnet, dass** das wenigstens eine Flüssigkeits-Steuerventil (32) dazu ausgebildet ist, einen Flüssigkeitsaustausch zwischen den aktiven Kammern (26A-1,26B-1) der Hydraulikzylinder (18A,18B) eines Einarmschwingen-Paars (12A,12B) mit zunehmender Erstreckung des Kolbens (25A,25B) in die Zylinderkammer (22A,22B) hinein oder aus dieser heraus gemäss einer wählbaren Funktionskurve zu steuern.

7. Radaufhängung (10) nach Anspruch 5 oder 6, **dadurch gekennzeichnet, dass** diese wenigstens zwei Dämpfungseinheiten (34A,34B) umfasst, deren Eingänge jeweils mit der Flüssigkeitsleitung (28) an einem Abschnitt (28A,28B) derer zwischen jeweils den aktiven Kammern (26A-1,26B-1) der Hydraulikzylinder (18A,18B) und dem Flüssigkeits-Steuerventil (32) verbunden sind.

8. Radaufhängung (10) nach einem der vorhergehenden Ansprüche, **dadurch gekennzeichnet, dass** diese eine Anzahl von mechanischen Bremsen umfasst, welche jeweils zwischen dem tragenden Fahrzeugelement (14) und den Einarmschwingen (12A,12B) derart angeordnet sind, um eine Schwenkbewegung der Einarmschwinge (12A,12B) in Relation zum tragenden Fahrzeugelement (14) zu bremsen, blockieren oder freizugeben.

9. Radaufhängung (10) nach Anspruch 8, **dadurch gekennzeichnet, dass** die mechanischen Bremsen jeweils einem Hydraulikzylinder (18A,18B) zugeordnet sind und dazu ansteuerbar sind, eine Bewegung der Kolbenstange (20A,20B) des Kolbens (25A,25B) in Relation zum Zylinder zu bremsen, zu blockieren oder freizugeben.

10. Radaufhängung (10) nach einem der vorhergehenden Ansprüche, **dadurch gekennzeichnet, dass** diese eine Anzahl von Federelementen (40A,40B) umfasst, wobei jeweils wenigstens ein Federelement (40A,40B) zwischen dem tragenden Fahrzeugelement (14) und den Einarmschwingen (12A,12B) derart angeordnet und ausgebildet ist, um eine Rückstellkraft zwischen dem tragenden Fahrzeugelement (14) und den jeweiligen Einarmschwingen (12A,12B) anzulegen.

11. Radaufhängung (10) nach einem der vorhergehenden Ansprüche, **dadurch gekennzeichnet, dass** diese eine Anzahl von Stossdämpfern (36A,36B) umfasst, wobei jeweils zumindest ein Stossdämpfer (36A,36B) einer Einarmschwinge (12A,12B) zugeordnet ist, wobei die Stossdämpfer (36A,36B) jeweils mit dem tragenden Fahrzeugelement (14) und/oder den Einarmschwingen (12A,12B) verbunden sind.

12. Radaufhängung (10) nach Anspruch 11, **dadurch gekennzeichnet, dass** diese eine Anzahl von Hebelelementen (38A,38B) umfasst, wobei ein jeweils einer Einarmschwinge (12A,12B) zugeordnetes Hebelelement (38A,38B) schwenkbar am tragenden Fahrzeugelement (14) angebracht ist und dessen Abschnitte jeweils mit dem Stossdämpfer (36A,36B) und/oder dem Hydraulikzylinder (18A,18B) verbunden sind.

13. Radaufhängung (10) nach Anspruch 11, **dadurch gekennzeichnet, dass** die Stossdämpfer (36A,36B) und die Hydraulikzylinder (18A,18B) einer jeweils zugeordneten Einarmschwinge (12A,12B) seriell miteinander verbunden sind.

14. Radaufhängung (10) nach Anspruch 13, **dadurch gekennzeichnet, dass** die Stossdämpfer (36A,36B) und die Hydraulikzylinder (18A,18B) einer jeweils zugeordneten Einarmschwinge (12A,12B) starr miteinander verbunden sind.

15. Radaufhängung (10) nach Anspruch 13, **dadurch gekennzeichnet, dass** die Stossdämpfer (36A,36B) und die Hydraulikzylinder (18A,18B) einer jeweils zugeordneten Einarmschwinge (12A,12B) über einen gemeinsamen Anlenkpunkt zueinander schwenkbar angelenkt sind, ferner umfassend eine zwischen dem gemeinsamen Anlenkpunkt und dem tragenden Fahrzeugelement (14) angelenkte Strebe (42A,42B).

16. Radaufhängung (10) nach Anspruch 11, **dadurch gekennzeichnet, dass** die Stossdämpfer (36A,36B) und die Hydraulikzylinder (18A,18B) einer jeweils zugeordneten Einarmschwinge (12A,12B) sich in Längsrichtung wenigstens abschnittsweise überlappend angeordnet sind und starr miteinander verbunden sind.

17. Radaufhängung (10) nach einem der vorhergehenden Ansprüche, **dadurch gekennzeichnet, dass** die jeweils einem Hydraulikzylinder (18A,18B) zugeordneten Einarmschwingen (12A,12B) entgegengesetzt auf Druckbelastung oder auf Zugbelastung der aktiven Kammer (26A-1,26B-1) des jeweiligen Hydraulikzylinders (18A,18B) auslenkbar sind.

18. Fahrzeug mit einer Radaufhängung (10) nach einem der vorhergehenden Ansprüche, ausgebildet zum Neigen bei Kurvenfahrten in Richtung zum Kurveninneren.

19. Fahrzeug nach Anspruch 18, **dadurch gekennzeichnet, dass** dieses eine Pumpe und einen Flüssigkeitsspeicher umfasst, wobei die Pumpe zwischen dem Flüssigkeitsspeicher und der Flüssigkeitsleitung (28) verbunden ist und dazu ansteuerbar ist, zusätzliche Flüssigkeit aus dem Flüssigkeitsspeicher in die Flüssigkeitsleitung (28) zu überführen oder Flüssigkeit aus der Flüssigkeitsleitung (28) in den Flüssigkeitsspeicher zu überführen.

20. Dreirädriges Motorfahrzeug mit einer Radaufhängung nach einem der Ansprüche 1 bis 17, welche die gegenseitige Ausrichtung der Vorderradachsen und/oder Hinterradachsen in Abhängigkeit einer Fahrzeugneigung verändert.
